# EUROPEAN PATENT APPLICATION

(11) **EP 3 330 912 A1**
(43) Date of publication of application: **06.06.2018**
(21) Application number: 17167644.8
(22) Date of filing: 21.04.2017
(51) Int. Cl.: G06Q 10/10, G06Q 50/00

(54) **CYBERBULLYING PREVENTION**

(30) Priority: 30.11.2016 US 201615365911
(71) Applicant: Fujitsu Limited, Kawasaki-shi, Kanagawa 211-8588 (JP)
(72) Inventor: TSOU, I-wen Winnie, Sunnyvale, CA California 94085 (US)
(74) Representative: Sunderland, Andrew Michael

(57) **Abstract**

A method of determining a risk of cyberbullying in accordance with the present disclosure may include electronically intercepting an outgoing electronic communication at a source of the outgoing electronic communication. The method may additionally include determining a cyberbullying risk score for the outgoing electronic communication, the cyberbullying risk score based at least on content of the outgoing electronic communication, user history of a user sending the outgoing electronic communication, and a third party policy. The method may also include, in response to the cyberbullying risk score exceeding a threshold, providing a recommended course of action to the user sending the outgoing electronic communication.

## Description

### FIELD

The embodiments discussed in the present disclosure are related to cyberbullying prevention.

### BACKGROUND

In recent years, cyberbullying has become a new form of antagonizing individuals. Unkind or unwanted electronic messages may be sent from one individual to another, or may be sent to others about an individual.

The subject matter claimed herein is not limited to embodiments that solve any disadvantages or that operate only in environments such as those described above. Rather, this Background Section is provided to illustrate one exemplary technology area where embodiments of the present disclosure described herein may be practiced.

### SUMMARY

According to an aspect of an embodiment, a method of determining a risk of cyberbullying may include electronically intercepting an outgoing electronic communication at a source of the outgoing communication. The method may additionally include determining a cyberbullying risk score for the outgoing electronic communication, the cyberbullying risk score based at least on content of the outgoing electronic communication, user history of a user sending the outgoing electronic communication, and a third party policy. The method may also include, in response to the cyberbullying risk score exceeding a threshold, providing a recommended course of action to the user sending the outgoing electronic communication.

The object and advantages of the embodiments will be realized and achieved at least by the elements, features, and combinations particularly pointed out in the claims.

Both the foregoing general description and the following detailed description provide examples and are explanatory and are not restrictive.

### BRIEF DESCRIPTION OF THE DRAWINGS

Example embodiments will be described and explained with additional specificity and detail through the use of the accompanying drawings in which:
FIGURE 1 illustrates an example system for cyberbullying prevention;
FIGURE 2 illustrates a block diagram of an example electronic device used in cyberbullying prevention;
FIGURE 3 illustrates a block diagram of an example system for determining a cyberbullying risk score;
FIGURE 4 illustrates an example of a user profile;
FIGURE 5 illustrates an example of a user interface for setting up a system to prevent cyberbullying;
FIGURE 6 illustrates a flow diagram of an example method for cyberbullying prevention; and
FIGURES 7A and 7B illustrate a flow diagram of another example method for cyberbullying prevention.

### DESCRIPTION

The present disclosure relates to preventing or at least reducing cyberbullying.

As used in the present disclosure, the term "cyberbullying" may refer to any type of electronic communication with a message meant to offend, degrade, belittle, or otherwise demean an individual or group. Such messages may include text, images, videos, audio, or any other form of electronic communication. Cyberbullying includes instances in which the target of the cyberbullying receives the electronic communication and when the target does not receive the electronic communication.

Embodiments of the present disclosure are explained with reference to the accompanying drawings.

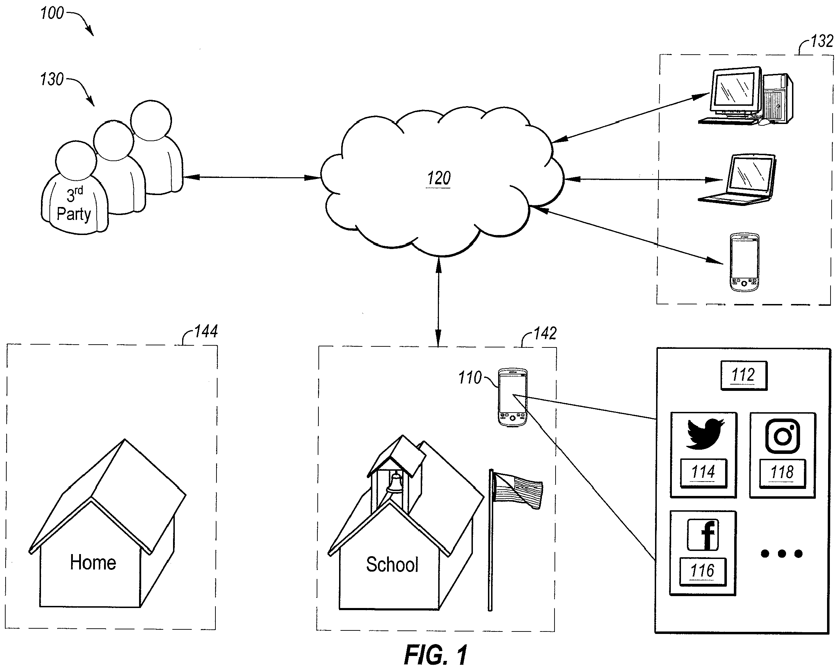

FIGURE 1 is a diagram of an example system 100 for cyberbullying prevention, in accordance with one or more embodiments of the present disclosure. The system 100 may include an electronic device 110 via which a user may generate a message to be sent out over a network 120 to one or more recipients 132. The electronic device 110 or the user of the electronic device 110 may be described as the source of such an outgoing message. For such an outgoing message, there is a risk that the outgoing message may be a cyberbullying message. For example, the outgoing message may including bullying content towards one of the recipients 132. As another example, the outgoing message may include inappropriate images of a different individual than the recipients 132. The outgoing message may take any form. For example, the outgoing message may include text, images, videos, audio, etc. through any service or modality, including email, text message, instant messaging, blog posts, or using any third party service such as GOOGLE CHAT®, FACEBOOK®, TWITTER®, INSTAGRAM®, SNAPCHAT®, GOOGLE+®, MYSPACE®, LINKEDIN®, PINTEREST®, TUMBLR®, FLICKR®, VINE®, YOUTUBE®, or other third party service.

The system 100 may operate to determine a likelihood of whether the outgoing message is a cyberbullying message, and may offer a recommended course of action or other intervention if the outgoing message may be a cyberbullying message. In some embodiments, the system 100 may include software 112 that may operate on the electronic device 110. The software 112 may perform one or more of the operations described in the present disclosure. For example, the software 112 may intercept one or more outgoing messages and may perform an analysis on the outgoing message to assign a cyberbullying risk score to the outgoing message. Based on the cyberbullying risk score, the software 112 may offer a recommended course of action to the user. For example, such a recommended course of action may include a recommendation to change the outgoing message, to not send the outgoing message, to send the outgoing message to fewer recipients, to talk to the recipient before sending such a message, to request compliance with school/company policies, or some other recommendation.

In some embodiments, the software 112 may include a plug-in or application programming interface (API) specific to a particular third party service, such as a plugin 114 for TWITTER®, a plugin 116 for FACEBOOK®, and/or a plugin 118 for INSTAGRAM®, etc. The plugins 114, 116, and/or 118 may facilitate the interception of outgoing messages through the respective third party service. Additionally or alternatively, the plugins 114, 116, and/or 118 may facilitate providing feedback to the user regarding a recommended course of action, and/or sending a notification to a third party 130 such as a parent, teacher, or other administrator.

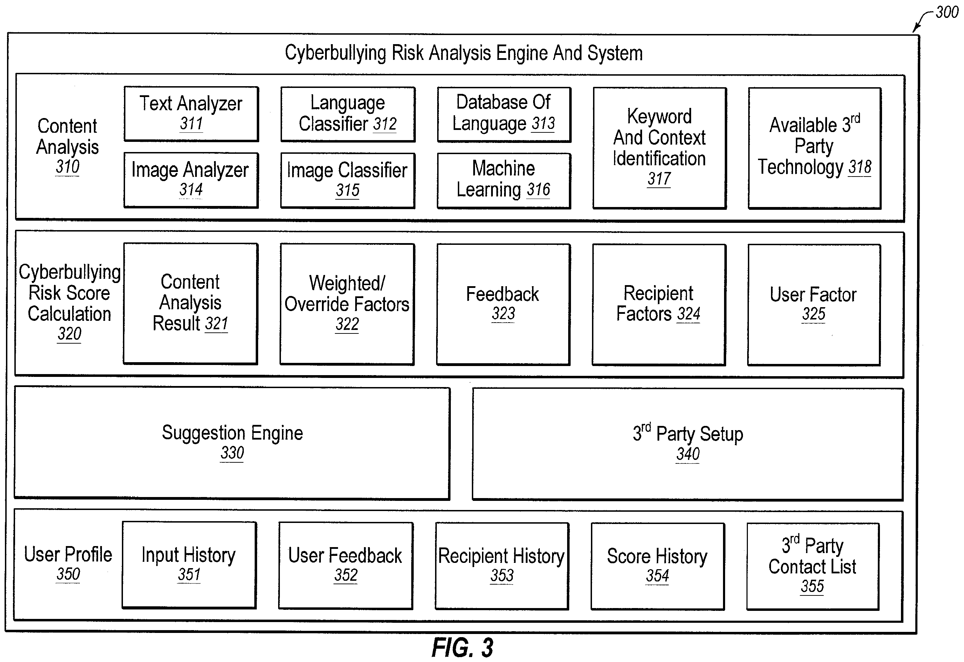

The cyberbullying risk score may be based on any number of a variety of factors, including the content of the message, factors associated with the user sending the outgoing message, factors associated with the recipient 132 of the message, any previously received feedback, and/or any policies or settings put in place by the third party 130. The determination of the cyberbullying risk score according to at least one embodiment is described in greater detail with reference to, e.g., FIGURES 3, 6, and 7.

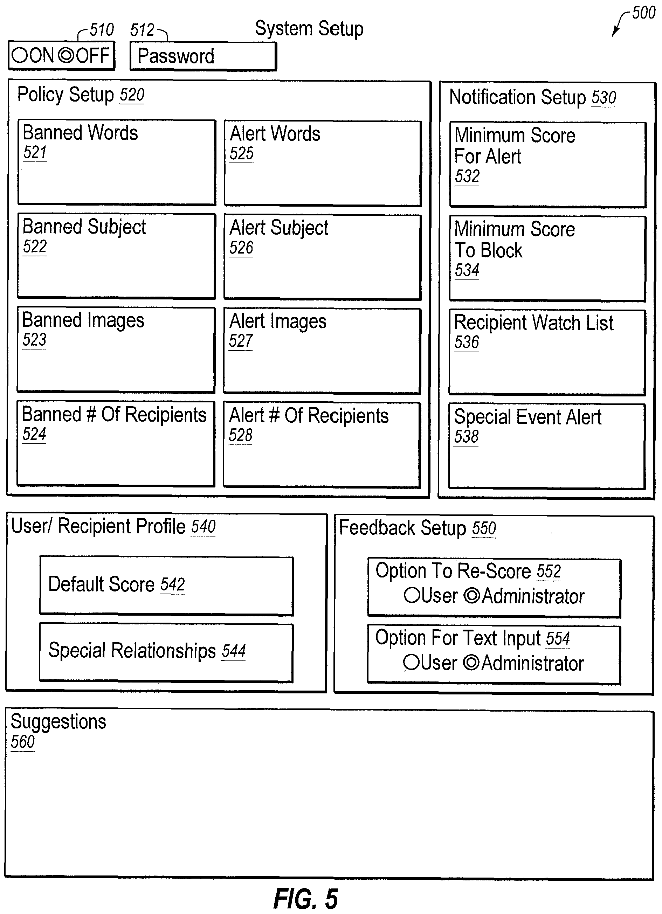

The third party 130 may more generally include one or more third parties 130. In some embodiments, the one or more third parties 130 (hereinafter "third party 130" or "third parties 130") may be involved with various aspects of the system 100. In some embodiments, the third parties 130 may facilitate an initial setup or arranging of the system 100 to prevent or at least reduce cyberbullying. For example, the third party 130 may select various words, topics, image categories, or other criteria or parameters that may automatically trigger a block of an outgoing message. Various aspects of the initial setup or arrangement of the system 100 according to at least one embodiment are described with reference to FIGURE 5.

In some embodiments, the third parties 130 may receive notifications, reports, or other messages regarding any outgoing messages that may have had a cyberbullying risk score that exceeds a threshold. For example, a parent or teacher may receive a text message when a child sends a message with a cyberbullying risk score that exceeds a threshold. As another example, a system administrator for a company or other entity may receive a weekly report of any communications with a cyberbullying risk score that exceeded a threshold that were sent by employees of the company or other entity.

In some embodiments, the context in which the user is generating the outgoing message may affect the cyberbullying risk score and/or the threshold at which certain actions are triggered. For example, if the user is at school 142, a first threshold may be used that is lower than a threshold if the user is at home 144. Stated another way, if the user is generating an outgoing message in the context of being at the school 142, the outgoing message may be analyzed more stringently to determine whether or not the outgoing message is a cyberbullying message. As another example, if the user creates an outgoing message that exceeds a threshold while at the school 142, the third party 130 may include a teacher or school administrator that may receive a notification of the outgoing message.

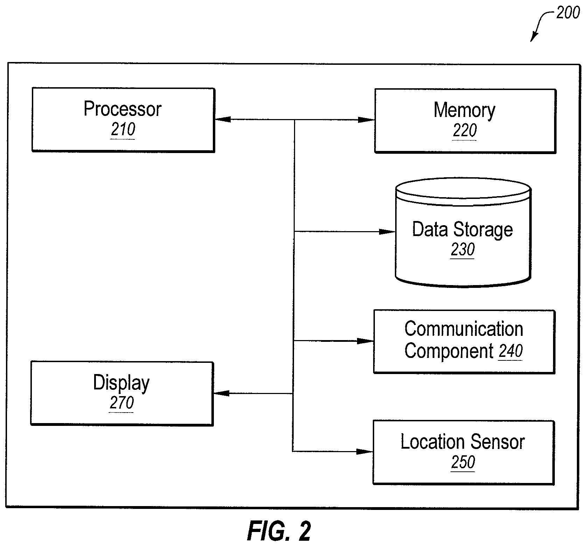

The electronic device 110 may include any device capable of generating electronic content and submitting it over the network 120. The electronic device 110 may be implemented in any form, such as a mobile phone, a smartphone, a tablet computer, a laptop computer, a digital camera, a personal digital assistant (PDA), a gaming console or remote, or other electronic device. In at least one embodiment, the electronic device 110 may be implemented as an electronic device 200 of FIGURE 2.

The network 120 may include any device, system, component, or combination thereof configured to provide communication between one or more of the electronic device 110, the third parties 130, and/or the recipients 132. By way of example, the network 120 may include one or more wide area networks (WANs) and/or local area networks (LANs) that enable the electronic device 110, the third parties 130, and/or the recipients 132 to be in communication. In some embodiments, the network 120 may include the Internet, including a global internetwork formed by logical and physical connections between multiple WANs and/or LANs. Alternately or additionally, the network 120 may include one or more cellular RF networks and/or one or more wired and/or wireless networks such as, 802.xx networks, Bluetooth access points, wireless access points, IP-based networks, or the like. The network 120 may also include servers that enable one type of network to interface with another type of network. Additionally or alternatively, the network 120 may include an Intranet, or one or more computing devices in communication within an organization or in an otherwise secure manner, such as within the school 142 or at the home 144.

Modifications, additions, or omissions may be made to FIGURE 1 without departing from the scope of the present disclosure. For example, the system 100 may include more or fewer elements than those illustrated and described in the present disclosure. For example, the system 100 may include any number of third party applications on the electronic device 110, and each may include its own plugin or may operate or otherwise interface with the software 112. As another example, there may be any number of contexts in which the user may operate the electronic device 110. As another example, one or more of the tasks associated with determining a cyberbullying risk score, providing a recommended course of action, providing notifications, providing feedback, etc. may be performed at a server (not illustrated) or at an electronic device of the third parties 130.

FIGURE 2 illustrates a block diagram of an example electronic device 200 used in cyberbullying prevention, in accordance with one or more embodiments of the present disclosure. For example, the electronic device 110 may be implemented as the electronic device 200. The electronic device 200 may take any form, including a desktop, a laptop, a tablet, a mobile telephone or other mobile device, a server, a wearable device, etc.

The electronic device 200 may include a processor 210, a memory 220, a data storage 230, a communication component 240, a location sensor 250, and a display 270. The processor 210, the memory 220, the data storage 230, the communication component 240, the location sensor 250, the scanning device 260, and/or the display 270 may all be communicatively coupled such that each of the components may communicate with the other components. The electronic device 200 and/or the processor 210 may perform or control performance of any of the operations described in the present disclosure.

In general, the processor 210 may include any suitable special-purpose or general-purpose computer, computing entity, or processing device including various computer hardware or software modules and may be configured to execute instructions stored on any applicable computer-readable storage media. For example, the processor 210 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIGURE 2, the processor 210 may include any number of processors configured to perform or control performance of, individually or collectively, any number of operations described in the present disclosure.

In some embodiments, the processor 210 may interpret and/or execute program instructions and/or process data stored in the memory 220, the data storage 230, or the memory 220 and the data storage 230. In some embodiments, the processor 210 may fetch program instructions from the data storage 230 and load the program instructions in the memory 220. After the program instructions are loaded into memory 220, the processor 210 may execute the program instructions.

The memory 220 and the data storage 230 may include computer-readable storage media for carrying or having computer-executable instructions or data structures stored thereon. Such computer-readable storage media may include any available media that may be accessed by a general-purpose or special-purpose computer, such as the processor 210. By way of example, such computer-readable storage media may include tangible or non-transitory computer-readable storage media including RAM, ROM, EEPROM, CD-ROM or other optical disk storage, magnetic disk storage or other magnetic storage devices, flash memory devices (e.g., solid state memory devices), or any other storage medium which may be used to carry or store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 210 to perform or control performance of a certain operation or group of operations.

The communication component 240 may include any device, system, component, or collection of components configured to allow or facilitate communication between the device 200 and another device (e.g., by communicating over the network 120 of FIGURE 1). For example, the communication component 240 may include a modem, a network card (wireless or wired), an infrared communication device, an optical communication device, a wireless communication device (such as an antenna), and/or chipset (such as a Bluetooth device, an 802.6 device (e.g. Metropolitan Area Network (MAN)), a WiFi device, a WiMax device, cellular communication facilities, etc.), and/or other communication components. The communication component 240 may permit data to be exchanged with any network (including the network 120 of FIGURE 1) such as a cellular network, a WiFi network, a MAN, an optical network, or other suitable network, and/or with any other devices described in the present disclosure, including remote devices. Combinations of any of the above may also be included within the scope of the communication component 240.

The location sensor 250 may include any device, system, component, or collection of components configured to determine or facilitate determination of the physical location of the electronic device 200. For example, the location sensor 250 may include a global positioning service (GPS) sensor, a proximity sensor, an accelerometer, a motion sensor, a gyroscope, a compass, or other location sensor. Additionally or alternatively, the location sensor 250 may include a software routine or set of instructions that utilizes the communication component 240 or other components of the electronic device 200 to determine nearby physical components and extrapolate a physical location. For example, the location sensor 250 may determine three nearest cellular telephone towers and extrapolate a physical location, or may determine a WiFi hotspot to which the communication component 240 is connected, and extrapolate a physical location. As another example, the location sensor 250 may include a software routine or set of instructions that will determine an internet protocol (IP) address of the electronic device 200 and associate that IP address with a physical location (e.g., the school 142 or the home 144 of FIGURE 1). In some embodiments, the location sensor 250 may be configured to communicate with a beacon to sense the location of the electronic device 200. Combinations of any of the above may also be included within the scope of the location sensor 250.

The display 270 may include any component, device, system, or combination thereof configured to visually depict information. The display 270 may include a cathode ray tube (CRT) display, a liquid-crystal display (LCD), a thin-film-transistor LCD, a plasma display, one or more light-emitting diodes (LED), one or more organic LEDs, one or more light bulbs, a dot matrix display, a vacuum fluorescent display, a twisted nematic field effect LCD, a super-twisted nematic LCD, electronic paper (e.g. electrophoretic display, electrowetting display, electrofluidic display, interferometric modulator display), or other display. The display 270 may display information in any format or structure. For example, the display 270 may be implemented as a monitor, screen, panel of lights, etc. The display 270 may be implemented as a stand-alone display or as a sub-part or component of another device or system. The display 270 may include any secondary features such as three-dimensional display, touch-screen control, directional display control (e.g. viewing angle variance for the display 270), etc. Combinations of any of the above may also be included within the scope of the display 270.

Modifications, additions, or omissions may be made to FIGURE 2 without departing from the scope of the present disclosure. For example, the device 200 may include more or fewer elements than those illustrated and described in the present disclosure. For example, the device 200 may omit any of the memory 220, the data storage 230, the location sensor 250, and/or the display 270, or any combinations thereof.

FIGURE 3 illustrates a block diagram of an example system 300 for determining a cyberbullying risk score, in accordance with one or more embodiments of the present disclosure. For example, the system 300 may be implemented as a cyberbullying risk analysis engine and system. The system 300 may be implemented in whole or in part as the software 112 of FIGURE 1.

The system 300 may include a content analysis engine 310. The content analysis engine 310 may incorporate and/or utilize any of a variety of techniques. For example, the content analysis engine 310 may include text analyzer 311 (e.g., for analyzing text to recognize particular words or phrases) or text recognition, a language classifier 312 (e.g., for classifying phrases based on their intent, content, positivity, negativity, likely effect on others, or other classification), a database of language 313 that may include various words across one or more languages (e.g., a database of terms or phrases that may include meanings or uses associated with cyberbullying or other negative communication), image analyzer 314 (e.g., for analyzing images to recognize the content of the images) or image recognition, an image classifier 315 (e.g., for classifying images into a particular category such as sports, movies, nudity, violence, video games, or other categories), machine learning 316 (e.g., for monitoring various changes or modifications to previously determined contents or categories and incorporating those modifications into future determinations), keyword and context identification 317 (e.g., for determining whether target words or phrases are included and determining the context in which they have been used), and/or one or more available third party technologies 318 performing techniques such as natural language processing (NLP), text sentiment analysis, or other techniques. For example, for an outgoing message with a textual message, the content analysis engine 310, and more particularly the keyword and context identification 317, may perform search for various keywords in the text and identify the context of any keywords that are found. The content analysis engine 310 may additionally or alternatively search a database of language for terms commonly associated with cyberbullying. Additionally or alternatively, the content analysis engine 310 may perform text sentiment analysis to determine whether the text is positive or negative.

In some embodiments, the content analysis engine 310 may utilize third party services, e.g., as the available third party technologies 318 or other components of the content analysis engine 3130. Some examples of such services may include published lists of swear or curse words (e.g., www.noswearing.com/dictionary), tools for language classification (e.g., as the language classifier 312) and/or sentiment analysis (e.g., www.ibm.com/smarterplanet/us/en/ibmwatson/developercloud/nl-classifier.html or www.metamind.io/classifiers/155 or datamarket.azure.com/dataset/amla/text-analytics), or tools for image recognition (e.g., www.imageidentify.com or www.metamind.io/vision/general or vision.alchemy.ai or www.projectoxford.ai/
demo/emotion#detection).

As another example, for an outgoing message with a short phrase and an image, the short phrase may undergo a similar analysis as described above. For example, the image may be classified, e.g., by the image classifier 315, and have image recognition performed on the image.

In some embodiments, one or more aspects of the content analysis engine 310 may identify an attribute score and an attribute confidence rate for a given attribute. The attribute score may reflect a degree of harmfulness and the attribute confidence rate may reflect how likely the attribute score is to be correct. For example, if an outgoing message included the phrase "you look fat," the attribute score may have a high attribute score regarding the degree of harmfulness (e.g., 4.0 out of 5.0), and may include a high confidence rate because of the accuracy of text recognition (e.g., 100%). As another example, a shadowy, grainy image that may include nudity may have a high attribute score regarding a degree of harmfulness (e.g., 5.0 out of 5.0), and may include a low confidence rate (e.g., 30%) because of the difficulty in image classification/recognition and the capability for error because of the shadowy and grainy quality of the image.

The system 300 may include a cyberbullying risk score calculation engine 320. The cyberbullying risk score calculation engine 320 may utilize any of a variety of factors to determine a cyberbullying risk score. For example, the cyberbullying risk score calculation engine 320 may utilize content analysis results 321 generated by the content analysis engine 310. In some embodiments, the content analysis results 321 may include the attribute score and the attribute confidence rate.

The cyberbullying risk score calculation engine 320 may additionally or alternatively utilize any weighted or overriding factors 322. For example, a third party (e.g., a teacher or parent) may designate that certain words, topics, or image categories may include an automatic override such as automatically blocking an outgoing communication if it contains nudity or certain swear words or phrases.

In some embodiments, the cyberbullying risk score calculation engine 320 may utilize feedback 323. For example, a third party teacher may provide feedback regarding a recent string of messages saying "I'm going to kill you" that are associated with a new video game that a group of students is playing, the feedback indicating that the messages are not harmful and actually have a low risk of cyberbullying. Such feedback may lower an eventual cyberbullying risk score for an outgoing communication that includes the phrase "I'm going to kill you," such as when it occurs in an exchange that mentions the new video game. As another example, if a user has provided feedback regarding a questionable outgoing communication that had an image of a bare shoulder, indicating that the student is in an anatomy class, another outgoing message from the user with an image of a bare back may have a lower cyberbullying risk score than the outgoing message would otherwise score.

In some embodiments, the feedback 323 may include an attribute score and an attribute confidence rate. For example, feedback from a user may have a lower confidence rate compared to a parent or teacher feedback such that feedback from the parent may influence the cyberbullying risk score to a greater degree compared to the feedback from the user. In some embodiments, the confidence rate may operate as a weighting factor such that certain attributes may affect the cyberbullying risk score more heavily.

In some embodiments, the cyberbullying risk score calculation engine 320 may utilize one or more recipient factors 324. Examples of such factors may include the number of recipients (e.g., the more recipients to receive the outgoing communication, the higher the risk of cyberbullying), the frequency with which messages are being sent from the user to the recipient (e.g., with increasing frequency of messages, the risk of cyberbullying may increase), a profile of the recipient (e.g., age, gender, school, grade, previous cyberbullying messages sent to the recipient, etc.). For example, a previous victim of cyberbullying may be more sensitive to cyberbullying such that if the profile of the recipient indicates a history of being cyberbullied, a threshold for blocking or alerting a message may be lower than if the profile of the recipient does not indicate a history of being cyberbullied, and a message or notification may be sent to a third party associated with the recipient (e.g., a parent or teacher). As another example, an older student sending a message to a younger student may lead to a higher cyberbullying risk score.

In some embodiments, one or more of the recipient factors 324 may include an attribute score and an attribute confidence rate. For example, a recipient profile indicating previous cyberbullying messages may include the confidence rate that the previous message was cyberbullying.

In some embodiments, the cyberbullying risk score calculation engine 320 may utilize one or more user factors 325, such as from a profile of the user. Examples of such factors may include age, gender, school, grade, parent, parent contact information, number of messages sent, content of messages sent, number of previous cyberbullying messages sent, friends, default score applied to messages for the user, etc.

In some embodiments, one or more of the user factors 325 may include an attribute score and an attribute confidence rate. For example, previous messages from the user may include confidence rates associated with the previous messages. As another example, each friend of the user may have a likelihood of the individual being a friend.

In these and other embodiments, one or more other factors aside from the content analysis (e.g., recipient factors, user factors, other factors), may utilize a binary attribute confidence score to include or exclude the factor from analysis. For example, for several such factors the confidence score will be 100% (e.g., number of recipients, highest previous score of user, and/or other factors).

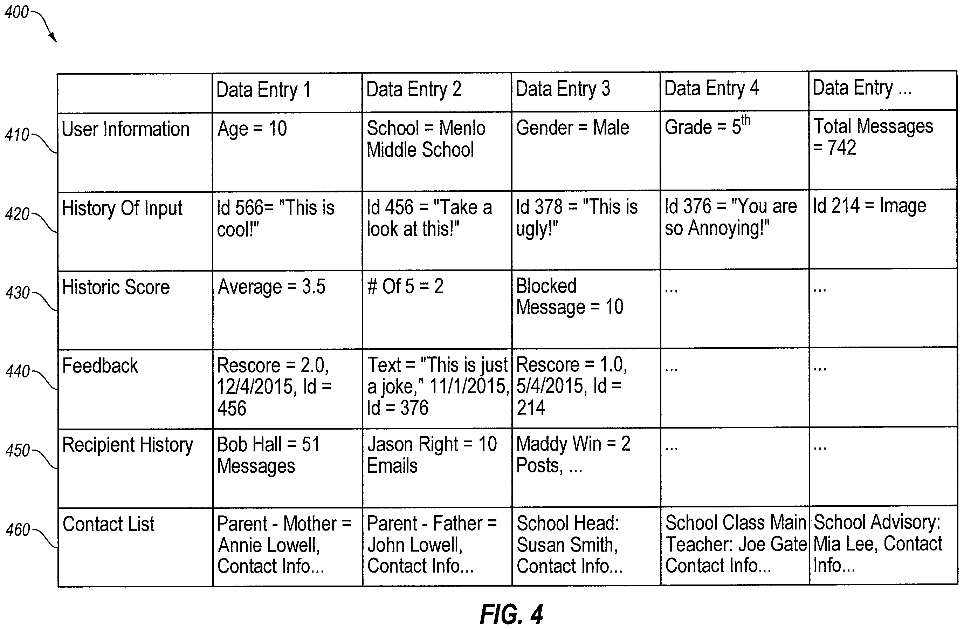

An example of a user profile 350 as part of the cyberbullying risk analysis engine 300 is illustrated in FIGURE 3, and an example implementation of a user profile is illustrated in FIGURE 4. As illustrated in FIGURE 3, the user profile 350 may include any of a variety of pieces of information, including input history 351 (e.g., what outgoing messages the user has sent), user feedback 352 (e.g., what feedback the user has provided regarding the user's outgoing messages), recipient history 353 (e.g., who the user has sent messages to), score history 354 (e.g., what the cyberbullying risk scores were for the previous messages of the user, or the highest previous cyberbullying risk score of the user, or the average cyberbullying risk score for the user, or other score(s)), third party contact list 355 (e.g., the parents of the user and their contact information, the teacher of the user and his contact information), and/or other information.

The cyberbullying risk score calculation engine 320 may produce a cyberbullying risk score. The cyberbullying risk score may be compared to one or more thresholds. For example, there may be a first threshold related to whether an alert should be sent to a third party or the message should be recorded in a report without prompting the user. As another example, there may be a second threshold that may be higher or lower than the first threshold that may provide a warning or an alert to the user that the outgoing message may have elements of cyberbullying in the message, without notifying a third party. As an additional example, there may be a third threshold that may be higher or lower than the first or second threshold that may block the outgoing message and prevent the user from sending the outgoing message. In some embodiments, if the cyberbullying risk score has exceeded any or any combination of thresholds, the user or the third party may provide feedback regarding the message. For example, if the cyberbullying risk score exceeds the second threshold, the user may provide feedback stating that the message was not a cyberbullying message and should have a lower risk score. As an additional example, if the cyberbullying risk score exceeds the third threshold, the third party may be allowed to provide feedback, or the user may or may not be allowed to provide feedback.

In some embodiments, any of the thresholds may be based on any of a variety of factors. For example, the location in which the outgoing message is being sent from may affect a threshold (e.g., a message sent from school) by increasing or decreasing the threshold or by weighting the outgoing message differently to raise or lower the corresponding cyberbullying risk score relative to the threshold. As another example, the third party may set the thresholds at particular levels based on the purposes of the cyberbullying monitoring. For example, a school may have a higher threshold than a library or a business. In some embodiments, any of the factors that affect the cyberbullying risk score may additionally or alternatively affect one or more of the thresholds. Modifying one or more of the thresholds rather than the cyberbullying risk score may yield the same or a similar result. For example, a given factor may raise a cyberbullying risk score or lower a threshold, both of which may be more likely to flag a message as potentially being a cyberbullying message.

The cyberbullying risk analysis engine 300 may additionally include a suggestion engine 330. The suggestion engine 330 may allow the user and/or third parties to provide suggestions regarding modifications to the cyberbullying risk analysis engine 300, the system 100 of FIGURE 1, or other systems or components described herein. The suggestion engine 330 may be implemented as a web portal, an option or field in an app, or in any other suitable manner.

The cyberbullying risk analysis engine 300 may additionally include a third party setup engine 340. An example of a user interface associated with the third party setup engine 340 is illustrated in FIGURE 5 and is described in more detail elsewhere herein. The third party setup engine 340 may allow a third party to interact with the cyberbullying risk analysis engine 300 to establish certain rules or policies, set any preferences or settings, or provide feedback or other input into the cyberbullying risk analysis engine 300.

The following provides a few examples of operation of the cyberbullying risk analysis engine 300 to determine a cyberbullying risk score and provide a recommended course of action.
*Example 1 -* For a given message, a content analysis attribute score may be 3, with an attribute confidence rate of 60%. The two may be multiplied for a content analysis score of 1.8. The message may not contain any keywords. The message may be sent to one recipient, yielding an attribute score of 1 and an attribute confidence rate of 100%. The two may be multiplied for a size of recipient list score of 1. The recipient frequency may have an attribute score of 5 with an attribute confidence rate of 100%, multiplied together for a score of 5 for frequency. The users highest previous score may be 3.2 with a confidence rate of 100%, multiplied together for a 3.2. In some embodiments, each of the scores for each of the attributes may be averaged ((1.8 + 1 + 5+ 3.2) /4 = 2.75), yielding a final score of 2.75, with the highest score coming from the frequency with which the user has sent messages to the recipient. In such an example, if the third party had set a fairly low threshold such that any message above 2.0 would alert the user, the user may be presented with a recommended course of action based on the score and/or the highest attribute. For example, the user may be presented with a message indicating that a large number of messages have been sent to the recipient and the user may want to consider whether that many messages is actually wanted by the recipient or how the recipient feels about receiving so many messages.
*Example 2* - A user "Al" may send a rumor about another classmate "Bob." Al may use some bad words with characters altered to avoid detection and to make the words look like they are just for fun. Al puts the message in an email to two hundred other students while at school. The content analysis may yield an attribute score of 3 out of 5 with an attribute confidence score of 70%, yielding a content analysis score of 2.1. Bob may have been a recent target of cyberbullying, and so the recipient factor may identify that the outgoing message discusses Bob and is going to more than fifty recipients. This may trigger an automatic override set by the school. Because of the automatic trigger, the message may be blocked and the recommended course of action may include a message indicating that the message has been blocked, stating that the message discussed a personal issue about Bob and was sent to many people. The message may pose questions to the user inquiring whether the message is true and whether it is wise to send it to so many recipients.
*Example 3 -* A user "Al" may use a school computer to make an INSTAGRAM® post of an unclear picture of the private parts of another classmate, "Charlie" with the caption "Look!" The text analysis may yield an attribute score of 1 with an accuracy rating of 100%, yielding a content analysis score of 1. The image recognition analysis may yield a keyword tag of "nudity" and a score of 5, with a confidence rate of 50%, multiplied together for an image content score of 2.5. The school may have a setting in place that any pictures with nudity are blocked based on confidence rate and number of recipients. The more recipients, the lower the confidence rank may be before the image is blocked. For example, if Al has seventy five followers on INSTAGRAM® and the image analysis has a 50% confidence rate that the image is inappropriate, the image may be automatically blocked. Alternatively, the school may have a weighting factor that any image with potential nudity is weighted more heavily and may only have a score between 4 and 5, depending on the confidence rate, such that the image content score may be calculated to be 4.25 (e.g., 1*50% + 3.5 = 4.25). Additionally, the user may have had a previously sent message with a score of 5 out of 5 with 100% confidence. As another factor, the user may have had ten messages previously blocked, with a previously blocked message score following a sliding scale (e.g., 0 messages blocked = 1, 1-4 messages blocked = 2, 5-9 messages blocked = 3, 10-15 messages blocked = 4, 16+ messages blocked = 5) with a confidence rating of 100% yielding a previously blocked message score of 4. Averaging the scores (e.g., 1 (content analysis) + 4.25 (image content score) + 5 (previously sent message score) + 4 (previously blocked message score) / 4 = 3.6) yields a score of 3.6. Based on the previously sent message score and the image category, the message may be blocked and the keyword of inappropriate image may trigger an alert to the user such that the user may be presented with a message indicating that an inappropriate image is being sent and encouraging the user to abide by the school policy against the sharing of inappropriate images.
*Example 4 -* A user "Alice" has been playing a computer game with her friend "Dina" where they are about to battle, and Alice sends an email from her school computer to Dina saying "I am going to kill you!" The text analysis may yield an attribute score of 5 out of 5 with a confidence rate of 90%, yielding a content score of 4.5. Alice may have a highest previous score of 1.2, and the default score for Alice may be 1. After averaging the scores (e.g., 4.5 (content score) + 1.2 (previous score) + 1 (user default score) / 3 = 2.2), the rank may be 2.2. However, the term "kill" may be a keyword that automatically sends a message to a school official but does not block the message if the final score is below 3.5. The school official may review the message and re-score it as a 1, because of the context of the message (e.g., playing a game).

These examples have been provided with examples of third party policies, scores, weighting factors, and thresholds. Any such policies, scoring, weighting factors, thresholds, etc. may be used in implementing the present disclosure.

Modifications, additions, or omissions may be made to FIGURE 3 without departing from the scope of the present disclosure. For example, the cyberbullying risk analysis engine 300 may include more or fewer elements than those illustrated and described in the present disclosure. For example, the cyberbullying risk analysis engine 300 may omit any of the third party setup 340, the user profile 350, or any combinations thereof. As another example, any of the content analysis engine 310, the cyberbullying risk score calculation engine 320, and the user profile 350 may include more or fewer elements than those illustrated in FIGURE 3.

FIGURE 4 illustrates an example of a user profile 400, in accordance with one or more embodiments of the present disclosure. The user profile 400 may include user information 410, history of input 420 of the user, historic score data 430 of the user, feedback data 440 of the user, a recipient history 450, and a contact list 460. The history of input 420 may include or correspond to the input history 351 of FIGURE 3. The historic score data 430 may include or correspond to the score history 354 of FIGURE 3. The feedback 440 may include or correspond to the user feedback 352 of FIGURE 3. The recipient history 450 may include or correspond to the recipient history 353 of FIGURE 3. The contact list 460 may include or correspond to the third party contact list 355 of FIGURE 3.

In some embodiments, the user information 410 may include data such as age, school, gender, grade, and total number of messages sent and/or analyzed for cyberbullying. In some embodiments, the history of input 420 may include various messages previously sent by the user and an identifier associated with each of the messages. In some embodiments, the historic score data 430 may include an average score for the messages sent by the user, a number of messages sent by the user that have a maximum score (or an automatic block score), a number of messages that have been blocked for the user, the highest ranked score the user has had, etc.

In some embodiments, the feedback data 440 may include feedback provided by the user and/or third parties regarding the messages of the user. In these and other embodiments, the feedback data 440 may include comments from the user submitted by the user regarding a particular message (e.g., the message ID 376 of "You are so Annoying!" may have feedback from the user that "This is just a joke."). Additionally or alternatively, the feedback data 440 may include comments or rescores from a third party. For example, the message ID 456 may have been rescored by a parent to a 2, and the message ID 214 may have been rescored by a school administrator to a 1.

In some embodiments, the recipient history 450 may include recipients who have received messages from the user, and a count of the number of messages they have received. The recipient history 450 may additionally include information such as the most recent message sent to the recipient, the most frequent string of messages sent to the user and when that string of messages occurred, etc. By including such information, instances in which an abnormal series of messages are being sent may be detected, rather than a close friend that often receives frequent series of messages from the user.

The contact list 460 may include various individuals that may be contacted in association with the user. For example, one or both parents may be included, along with other guardians or family members (e.g., grandparents, adult siblings, etc.). Various school officials may also be included, such as the head school official, the main teacher of the user, and the advisor of the user. The contact list 460 may include multiple contact methods and a preferred method of contact (e.g., text message, email, automated telephone call, etc.).

Modifications, additions, or omissions may be made to FIGURE 4 without departing from the scope of the present disclosure. For example, the user profile 400 may include more or fewer elements than those illustrated and described in the present disclosure.

FIGURE 5 illustrates an example of a user interface 500 for setting up a system to prevent cyberbullying, in accordance with one or more embodiments of the present disclosure.

In some embodiments, the user interface 500 may include an on/off toggle 510 and an associated password field 512. For example, an administrator may enter a password in the password field 512 and toggle the on/off toggle 510. Toggling the on/off toggle 510 may enable or disable a cyberbullying prevention system, such as the system 100 of FIGURE 1.

In some embodiments, the user interface 500 may include a policy setup region 520. The policy setup region 520 may include one or more fields for setting policies. For example, a school administrator or system administrator may set various values to establish a particular policy for the school, business, or other organization. Such fields may include a banned words field 521 and an alert words field 525. The banned words field 521 may trigger an automatic block of a message and the alert words field 525 may trigger an alert if the word is used in a message. The fields of the policy setup region 520 may additionally or alternatively include a banned subject field 522 and an alert subject 526, such that if the particular subject is discussed in an outgoing message the message will either be blocked or trigger an alert, respectively. Additionally or alternatively, the fields of the policy setup region 520 may include a banned images field 523 and an alert images field 527, such that if an image of the banned/alert category is included in an outgoing message, the outgoing message may be banned or trigger an alert. The fields of the policy setup region 520 may additionally or alternatively include a banned number of recipients field 524 and an alert number of recipients field 528, such that if an outgoing message is addressed to the selected number or greater, the message will either be blocked or trigger an alert, respectively.

In some embodiments, the user interface 500 may include a notification setup region 530. The notification setup region 530 may include one or more fields for establishing notification settings. For example, a school administrator or system administrator may set various aspects that may trigger when notifications are sent for the school, business, or other organization. Such fields may include a minimum score for alert field 532 and a minimum score to block field 534 that may establish scores that may trigger a block of a message or an alert to be sent out. Additionally or alternatively, the notification setup region 530 may include a recipient watch list field 536 such that certain recipients may be particularly alerted, such as those previously targeted for cyberbullying, etc. Additionally or alternatively, the notification setup region 530 may include a special event alert field 538 such that during a particular time, or for a particular subject, certain aspects of the policy may be temporarily modified, adjusted, enhanced, or disabled.

In some embodiments, the user interface 500 may include a user/recipient profile region 540. The user/recipient profile region 540 may include one or more fields for establishing specific settings associated with a user and/or a recipient profile. For example, a school administrator or system administrator may enter information into various fields to set various parameters associated with a user and/or a recipient profile associated with the school, business, or other organization. Such fields may include a default score field 542, a special relationships field 544, any of the pieces of information identified in FIGURE 4, etc. The default score field 542 may set a default score for a user. For example, a user who has had behavioral problems at school and has been known to use other bullying tactics may have a relatively high default score. The special relationships field 544 may set various relationships among various users and/or recipients. For example, a user may have one or more close friends that they frequently send messages to. As another example, a user's parents or siblings may be identified in the special relationships field.

In some embodiments, the user interface 500 may include a feedback setup region 550. The feedback setup region 550 may include one or more fields for establishing specific settings associated with feedback for the cyberbullying prevention system. For example, a school administrator or system administrator may enter information into various fields to set various parameters associated with who may leave feedback and what sort of feedback may be left. Such fields may include an option to rescore field 552, an option for text input field 554, etc. The option to rescore field 552 may identify whether the user, an administrator (e.g., parent, teacher, etc.), or both may rescore the cyberbullying risk score for an outgoing message. The option for text input field 554 may identify whether the user, an administrator, or both may provide text feedback for an outgoing message.

In some embodiments, the user interface 500 may include a suggestions field 560. A third party utilizing the user interface 500 may offer suggestions to a vendor or other administrator of the cyberbullying prevention system in the suggestions field 560.

Modifications, additions, or omissions may be made to FIGURE 5 without departing from the scope of the present disclosure. For example, the user interface 500 may include more or fewer elements than those illustrated and described in the present disclosure. For example, any of the regions and/or fields may be removed, rearranged, or modified in some other manner.

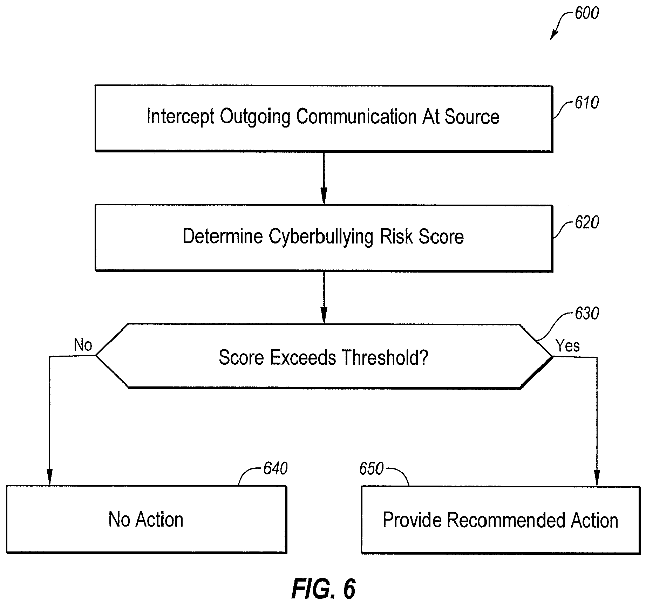

FIGURE 6 illustrates a flow diagram of an example method 600 for cyberbullying prevention, in accordance with one or more embodiments of the present disclosure. The method 600 may be performed by any suitable system, apparatus, or device. For example, the system 100 of FIGURE 1, the electronic device 200 of FIGURE 2, or another system may perform or control performance of one or more of the operations associated with the method 600. Although illustrated with discrete blocks, the steps and operations associated with one or more of the blocks of the method 600 may be divided into additional blocks, combined into fewer blocks, or eliminated, depending on the desired implementation.

At block 610, an outgoing communication may be intercepted at the source of the message. For example, a software program (e.g., the software 112 on the electronic device 110 of FIGURE 1) may electronically intercept an outgoing communication before it is sent at the electronic device at which the message was generated.

At block 620, a cyberbullying risk score may be determined. For example, the software program of the electronic device may determine a cyberbullying risk score and/or may communicate various data to a separate computer to perform the determination. The cyberbullying risk score may be determined in any manner consistent with the present disclosure. For example, the cyberbullying risk score may include an attribute that has a highest attribute score.

At block 630, a determination may be made as to whether the cyberbullying risk score may exceed a threshold. Such a determination may include a comparison of the cyberbullying risk score to one or more thresholds. If it is determined that the cyberbullying risk score exceeds one or more of the thresholds, the method 600 may proceed to block 650. If the cyberbullying risk score does not exceed the one or more thresholds, the method 600 may proceed to the block 640, where no action is taken.

At block 640, a recommended action is provided. The recommended action may be presented to the user of an electronic device as a message, a pop-up, etc. The recommended action may include an alternative message that could be sent, suggested modifications to the outgoing message, notice that a third party may be notified about the message, or other recommended action. The particular recommended action that is provided may depend on which of potentially multiple thresholds are exceeded by the cyberbullying risk score. For instance, one recommended action may be provided in response to a single one of multiple thresholds being exceeded, a different recommended action may be provided in response to a first combination of the multiple thresholds being exceeded, and yet another different recommended action may be provided in response to a different second combination of the multiple thresholds being exceeded.

Accordingly, the method 600 may be used to prevent or at least reduce cyberbullying. Modifications, additions, or omissions may be made to the method 600 without departing from the scope of the present disclosure. For example, the operations of the method 600 may be implemented in differing order. Additionally or alternatively, two or more operations may be performed at the same time. Furthermore, the outlined operations and actions are provided as examples, and some of the operations and actions may be optional, combined into fewer operations and actions, or expanded into additional operations and actions without detracting from the essence of the disclosed embodiments. All of the examples provided above are non-limiting and merely serve to illustrate the flexibility and breadth of the present disclosure.

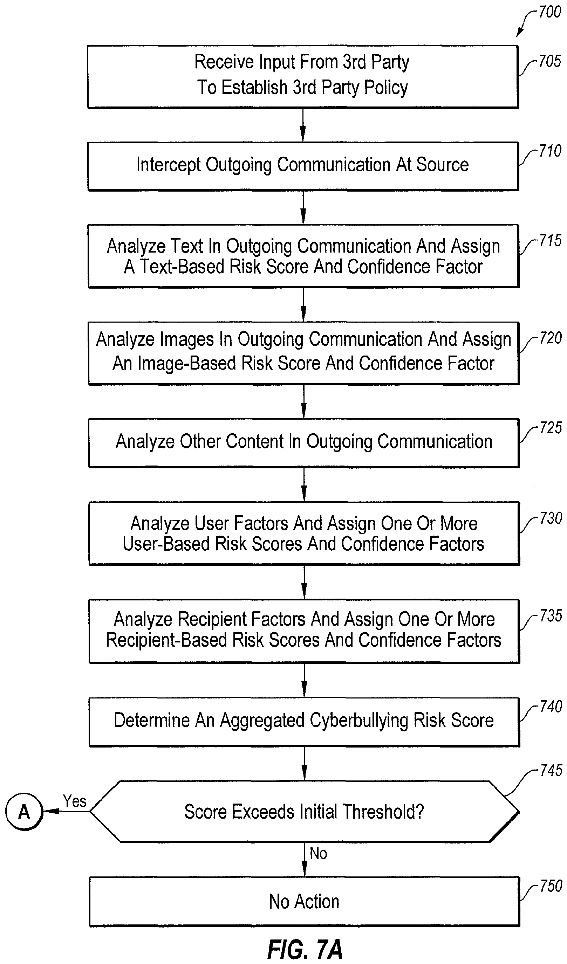

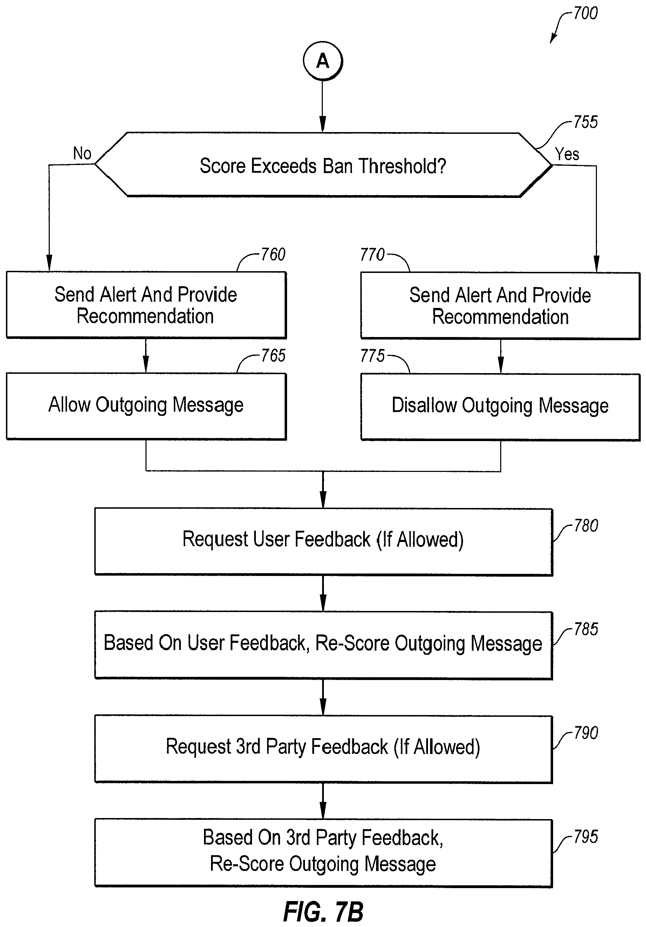

FIGURES 7A and 7B illustrate a flow diagram of another example method 700 for cyberbullying prevention, in accordance with one or more embodiments of the present disclosure. The method 700 may be performed by any suitable system, apparatus, or device. For example, the system 100 of FIGURE 1, the electronic device 110 of FIGURE 1, the electronic device 200 of FIGURE 2, or other system or device may perform one or more of the operations associated with the method 700. Although illustrated with discrete blocks, the steps and operations associated with one or more of the blocks of the method 700 may be divided into additional blocks, combined into fewer blocks, or eliminated, depending on the desired implementation.

At block 705, input is received from a third party to establish a third party policy for a cyberbullying prevention system. For example, a parent or administrator (e.g., the third parties 130 of FIGURE 1) may utilize a web interface, an application, or other suitable software, system, and/or device to access a user interface (e.g., the user interface 500 of FIGURE 5), to input various parameters in establishing a third party policy.

At block 710, an outgoing communication may be intercepted at the source of the outgoing message. The block 710 may be similar or comparable to the block 610 of FIGURE 6.

At block 715, text in the outgoing communication may be analyzed and a text-based risk score and confidence factor may be assigned to the outgoing message. For example, a software program running on an electronic device (e.g., the software 112 on the electronic device 110 of FIGURE 1) may perform a text analysis and assign such a score and confidence factor.

At block 720, images in the outgoing communication may be analyzed and an image-based risk score and confidence factor may be assigned to the outgoing message. For example, the software program running at the source or a third party image-analyzing service may perform such an operation.

At block 725, other content in the outgoing message may be analyzed. For example, audio, presentations, or any other content in the outgoing message may also be analyzed to determine a corresponding risk score and a corresponding confidence score for the outgoing communication.

At block 730, user factors may be analyzed and one or more user-based risk scores and confidence factors may be assigned to the outgoing message based on the user factors.

At block 735, recipient factors may be analyzed and one or more recipient-based risk scores and confidence factors may be assigned to the outgoing message based on the recipient factors.

At block 740, an aggregated cyberbullying risk score may be determined. The block 740 may be similar or comparable to the block 620 of FIGURE 6. In an example implementation, the software at the source of the outgoing message may look at any or all (or additional) risk scores generated at the blocks 715, 720, 725, 730, and/or 735 and derive therefrom an aggregated cyberbullying risk score for the outgoing message, e.g., by summing, averaging, or otherwise processing or combining such risk scores. Such an aggregated risk score may additionally include an attribute or factor that is highest or affects the aggregated cyberbullying risk score the most.

At block 745, a determination may be made as to whether the aggregated cyberbullying risk score exceeds an initial threshold. The analysis at block 745 may be similar or comparable to the analysis performed at block 630 of FIGURE 6. If it is determined that the cyberbullying risk score exceeds the initial threshold, the method 700 may proceed to block 755 in FIGURE 7B. If it is determined that the aggregated cyberbullying risk score does not exceed the initial threshold, the method 700 may proceed to the block 750 where no action is taken with the outgoing message.

At bock 755 in FIGURE 7B, a determination is made as to whether the aggregated cyberbullying risk score exceeds a ban threshold. The analysis may be similar to that performed at block 745 and or block 630 of FIGURE 6. If it is determined that the aggregated cyberbullying risk score exceeds the initial threshold ("Yes" at block 745) but does not exceed the ban threshold ("No" at block 755), the method 700 may proceed to block 760 and block 765. If it is determined that the aggregated cyberbullying risk score exceeds both the initial threshold ("Yes" at block 745) and the ban threshold ("Yes" at block 755), the method 700 may proceed to block 770 and block 775.

At block 760, an alert may be generated and a recommendation may be provided to the user. For example, the electronic device that the user uses to generate the outgoing message may display a popup or other message indicating that the message has a risk of cyberbullying. The message may additionally include considerations or other recommendations to correct any potential cyberbullying effect of the message.

At block 765, the outgoing message may be allowed by the cyberbullying prevention system and may be transmitted.

At block 770, an alert may be generated and a recommendation may be provided to the user. For example, the electronic device that the user uses to generate the outgoing message may display a popup or other message indicating that the message has a high risk of cyberbullying. The message may additionally include considerations or other recommendations to correct any potential cyberbullying effect of the message. The message may additionally or alternatively indicate that the outgoing message has been or will be blocked and a third party has been or will be contacted (e.g., a parent or school administrator).

At block 775, the outgoing message may be disallowed. For example, the message may be blocked, delayed, or otherwise temporarily or permanently prevented from being sent to one or more intended recipients.

At block 780, a request may be made for user feedback if user feedback is allowed. For example, a prompt may be displayed to the user requesting that the user provide a comment as to whether or why the outgoing communication is cyberbullying or not. For example, the user may indicate that they were joking around with a close friend, or sending frequent messages to a new significant other (e.g., girlfriend or boyfriend), or may provide some other excuse or explanation as to why the outgoing communication is not cyberbullying.

At block 785, the outgoing message may be rescored based on the feedback from the user. For example, if the user is permitted to rescore or if the text feedback from the user indicates that the aggregated cyberbullying risk score for the outgoing message is too high, the outgoing message may be re-scored to align the message with the feedback from the user.

At block 790, a request may be made for third party feedback if third party feedback is allowed. For example, a message may be sent to the third party with a link or the message may activate an application on an electronic device requesting that the third party provide a comment as to whether or why the outgoing communication is cyberbullying or not. For example, the third party may recognize that the outgoing message involves the user joking with a close friend, or the user sending frequent messages to a new significant other, or is otherwise benign/does not involve cyberbullying.

At block 795, the outgoing message may be rescored based on the feedback from the third party. For example, if the third party is permitted to rescore or if the text feedback from the third party indicates that the aggregated cyberbullying risk score for the outgoing message is too high, the outgoing message may be re-scored to align the message with the feedback from the third party.

Accordingly, the method 700 may be used to prevent or at least reduce cyberbullying. Modifications, additions, or omissions may be made to the method 700 without departing from the scope of the present disclosure. For example, the operations of the method 700 may be implemented in differing order. Additionally or alternatively, two or more operations may be performed at the same time. Furthermore, the outlined operations and actions are provided as examples, and some of the operations and actions may be optional, combined into fewer operations and actions, or expanded into additional operations and actions without detracting from the essence of the disclosed embodiments. All of the examples provided above are non-limiting and merely serve to illustrate the flexibility and breadth of the present disclosure.

While the present disclosure has been described with reference to cyberbullying, the same principles may be used to detect, reduce and/or eliminate blackmail, inappropriate comments on blogs or other websites, slander, harassment, or other negative behavior. The principles of the present disclosure may also be beneficial in employee training, or in other environments or contexts.

The implementations described herein may include the use of a special purpose or general-purpose computer including various computer hardware or software modules, as discussed in greater detail below.

Embodiments within the scope of the technology disclosed herein may also include computer-readable media for carrying or having computer-executable instructions or data structures stored thereon. Such computer-readable media may be any available media that may be accessed by a general purpose or special purpose computer. By way of example, such computer-readable media may include tangible or non-transitory computer-readable storage media including RAM, ROM, EEPROM, CD-ROM or other optical disk storage, magnetic disk storage or other magnetic storage devices, or any other medium which may be used to carry or store desired program code means in the form of computer-executable instructions or data structures and which may be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above may also be included within the scope of computer-readable media.

Computer-executable instructions include, for example, instructions and data which cause a general purpose computer, special purpose computer, or special purpose processing device to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," the term "containing" should be interpreted as "containing, but not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method of determining a risk of cyberbullying, the method comprising:
electronically intercepting an outgoing electronic communication at a source of the outgoing communication;
determining a cyberbullying risk score for the outgoing electronic communication, the cyberbullying risk score based at least on content of the outgoing communication, user history of a user sending the outgoing communication, and a third party policy; and
in response to the cyberbullying risk score exceeding a threshold, electronically providing a recommended course of action to the user sending the outgoing electronic communication.

2. The method of claim 1, wherein the cyberbullying risk score is further based on user preferences of the user sending the outgoing electronic communication, a profile of a recipient of the outgoing electronic communication, a number of recipients to whom the outgoing electronic communication is directed, and a frequency of messages from the user sending the outgoing electronic communication to the recipient of the outgoing electronic communication.

3. The method of claim 1 or claim 2, further comprising:
receiving input from the third party to establish the third party policy, including at least one of notification preference, and a default score of the user sending the outgoing electronic communication; and
receiving feedback from the third party regarding the cyberbullying risk score.

4. The method of any of claims 1 - 3, further comprising sending a notification to the third party regarding the outgoing electronic communication in response to the cyberbullying risk score exceeding the threshold.

5. The method of any preceding claim, wherein providing a recommended course of action to the user sending the outgoing electronic communication includes at least one of providing recommended alternative words, providing an educational video, providing an explanation of consequences of cyberbullying, or providing one or more principles of positive communication.

6. The method of any preceding claim, further comprising determining a location of the user sending the outgoing electronic communication, wherein the cyberbullying risk score is based on the location.

7. The method of claim 6, wherein the location is based off of one of an internet protocol (IP) address of an electronic device used by the user as the source of the outgoing electronic communication, or a global positioning service (GPS) chip of the electronic device used by the user.

8. The method of any preceding claim, wherein the content of the outgoing electronic communication is analyzed using at least one of text analysis, image analysis, text classification, image classification, machine learning, keyword and context identification, Natural Language Processing (NLP), text sentiment analysis, and image recognition.

9. The method of any preceding claim, wherein the outgoing electronic communication is generated using any of a plurality of applications for generating outgoing electronic communications.

10. The method of any preceding claim, wherein the threshold is a first threshold, the method further comprising allowing the outgoing electronic communication to be sent in response to the cyberbullying risk score exceeding the first threshold and not exceeding a second threshold,.

11. The method of any preceding claim, further comprising preventing the outgoing electronic communication from being sent in response to the cyberbullying risk score exceeding the threshold.

12. The method of any preceding claim, wherein the cyberbullying risk score is based on an attribute score and an attribute confidence rate for each attribute.

13. A mobile electronic device including:
memory;
a global positioning system (GPS) chip;
a display configured to display information based on display messages; and
a processor coupled to the GPS chip, the display, and the memory, the processor configured to execute or control execution of one or more operations, the operations including:
intercepting an outgoing communication being sent from the mobile electronic device;
determining a cyberbullying risk score for the outgoing communication, the cyberbullying risk score based at least on content of the outgoing communication, user history of a user using the mobile electronic device, a location of the mobile electronic device based on the GPS chip, and a third party policy; and
in response to the cyberbullying risk score exceeding a threshold, generating a display message to be sent to the display to provide a recommended course of action to the user.

14. The mobile electronic device of claim 13, wherein the threshold varies based on the location of the mobile electronic device.

15. The mobile electronic device of claim 14, wherein the location includes at least a school and the threshold is lower when the location is the school than when the location is not the school.

16. The mobile electronic device of any of claims 13 to 15, further comprising a communication device configured to transmit a message to the third party in response to the cyberbullying risk score exceeding the threshold.

17. A non-transitory computer readable medium containing instructions that are executable by a processor to perform or control performance of operations comprising the method according to any one of claims 1 - 12.
